# EUROPEAN PATENT APPLICATION

(11) **EP 4 722 902 A1**
(43) Date of publication of application: **08.04.2026**
(21) Application number: 24221829.5
(22) Date of filing: 19.12.2024
(51) Int. Cl.: G06F 9/4401, G06F 9/455, G06F 3/06, G06F 11/14

(54) **OPTIONAL PVC ASSOCIATION TO PREVENT POD FAILURE SCENARIOS**

(30) Priority: 03.10.2024 US 202418905424
(71) Applicant: Red Hat, LLC, Raleigh, NC 27601 (US)
(72) Inventor: RAVANELLI, Renata, Raleigh, 27601 (US); GRIFFIN, Leigh, Raleigh, 27601 (US)
(74) Representative: Murgitroyd & Company

(57) **Abstract**

Aspects of the present disclosure relate to optional volume associations to prevent pod failure. More specifically, a method of the present disclosure includes identifying, within a specification file, a reference to a first volume from a set of volumes or to a file associated with the first volume from the set of volumes. The method includes determining a subset of volumes from the set of volumes for execution of a workload within a pod, where the subset of volumes includes at least the first volume. The method includes determining, by a processing device, whether to boot the pod based at least on a viability of the first volume.

## Description

### TECHNICAL FIELD

Aspects of the present disclosure relate to volume associations, and more particularly, to optional volume associations to prevent pod failures.

### BACKGROUND

A container orchestration engine (such as the Redhat^{™} OpenShift^{™} module) may be a platform for developing and running containerized applications and may allow applications and the data centers that support them to expand from just a few machines and applications to thousands of machines that serve millions of clients. Container orchestration engines comprise a control plane and a cluster of worker nodes on which pods may be scheduled. A pod is may refer to the most basic (smallest) compute unit that can be defined, deployed, and managed by the control plane (e.g., one or more containers deployed together on a single host). During the creation of a pod, a volume may be attached with the pod, as indicated in a specification file. If the volume fails to be mounted during the creation of the pod, then creation of the pod is terminated.

### SUMMARY

According to a first aspect of the present disclosure there is provided a method, the method comprising identifying, within a specification file, a reference to a first volume from a set of volumes or to a file associated with the first volume from the set of volumes, determining a subset of volumes from the set of volumes for execution of a workload within a pod, wherein the subset of volumes includes at least the first volume, and determining, by a processing device, whether to boot the pod based at least on a viability of the first volume.

The method may further comprise determining the viability of the pod based at least on: whether the first volume is created, whether the first volume is mounted, or integrity checks on data within the first volume.

The method may further comprise marking the pod as mandatory for the execution of the workload based at least on the specification file. The pod may be prevented from booting in response to the pod marked as mandatory for the execution of the workload and a failure of the viability of the first volume.

The method may further comprise marking the pod as optional for the execution of the workload based at least on the specification file. The pod may be determined to be booted in response to the first volume being marked as optional for the execution of the workload and a failure of the viability of the first volume. A mounting of the first volume may be determined as false.

According to a second aspect of the present disclosure there is provided a system, the system comprising a memory and a processing device operatively coupled to the memory, the processing device configured to identify, within a specification file, a reference to a first volume from a set of volumes or to a file associated with the first volume from the set of volumes, determine a subset of volumes from the set of volumes for execution of a workload within a pod, wherein the subset of volumes includes at least the first volume, and determine, by a processing device, whether to boot the pod based at least on a viability of the first volume.

The processing device may be configured to determine the viability of the pod based at least on: whether the first volume is created, whether the first volume is mounted, or integrity checks on data within the first volume.

The processing device may be configured to mark the pod as mandatory for the execution of the workload based at least on the specification file. The pod may be prevented to boot in response to the pod marked as mandatory for the execution of the workload and a failure of the viability of the first volume.

The processing device may be configured to mark the pod as optional for the execution of the workload based at least on the specification file. The pod may be determined to be booted in response to the first volume being marked as optional for the execution of the workload and a failure of the viability of the first volume. A mounting of the first volume may be configured to be determined as false.

According to a third aspect of the present disclosure there is provided a non-transitory computer-readable medium having instructions stored thereon which, when executed by a processing device cause the processing device to carry out the method of the first aspect. The processing device is caused to identify within a specification file, a reference to a first volume from a set of volumes or to a file associated with the first volume from the set of volumes, determine a subset of volumes from the set of volumes for execution of a workload within a pod, wherein the subset of volumes includes at least the first volume, and determine, by the processing device, whether to boot the pod based at least on a viability of the first volume.

The instructions may further cause the processing device to determine the viability of the pod based at least on: whether the first volume is created, whether the first volume is mounted, or integrity checks on data within the first volume.

The instructions may further cause the processing device to mark the pod as mandatory for the execution of the workload based at least on the specification file. The pod may be prevented to boot in response to the pod marked as mandatory for the execution of the workload and a failure of the viability of the first volume. The processing device may be configured to mark the pod as optional for the execution of the workload based at least on the specification file.

The instructions may further cause the processing device to mark the pod as optional for the execution of the workload based at least on the specification file. The pod may be determined to be booted in response to the first volume marked as optional to for the execution of the workload and a failure of the viability of the first volume. The mounting of the first volume may be determined as false.

Individuals will appreciate the scope of the disclosure and realize additional aspects thereof after reading the following detailed description of the examples in association with the accompanying drawing figures.

### BRIEF DESCRIPTION OF THE DRAWINGS

The described aspects and the advantages thereof may best be understood by reference to the following description taken in conjunction with the accompanying drawings.
FIG. 1 is a block diagram that illustrates an example system in accordance with some aspects of the present disclosure.
FIG. 2 is a block diagram that illustrates an example of optional volume associations to prevent pod failure in accordance with some aspects of the present disclosure.
FIG. 3 is a block diagram that illustrates an example system in accordance with some aspects of the present disclosure.
FIG. 4 is a flow diagram of a method for optional volume associations to prevent pod failure in accordance with some aspects of the present disclosure.
FIG. 5 is a block diagram of an example of a computer system that may perform one or more of the operations described herein in accordance with some aspects of the present disclosure.

### DETAILED DESCRIPTION

A volume may be configured to provide storage space for a pod, and a specification file may define whether a volume is to be mounted during the pod creation. If the volume fails to mount, such failure may prevent the pod from being created. Failure of mounting the volume presents a challenge when the usage of the volume and the corresponding contents may be optional for the workloads contained within the pod. For example, an application may be tagged or marked with reference to a volume being attached, but failure of attachment of the volume may prevent the application from properly executing. As such, even if the volume is not mandatory for the execution of the application, the failure of mounting the volume prevents the application from properly executing.

The present disclosure addresses the above-noted and other deficiencies by using optional volume associations to prevent pod failures. In an example, a processing device identifies, within a specification file, a reference to a first volume from a set of volumes or to a file associated with the first volume from the set of volumes. The processing device determines a subset of volumes from the set of volumes for execution of a workload within a pod, where the subset of volumes includes at least the first volume. The processing device determines whether to boot the pod based at least on a viability of the first volume. Vis-à-vis identifying within the specification file the reference to the first volume or the file associated with the first volume, determining the subset of volumes for execution of the workload, and determining whether to boot the pod based at least on the viability of the first volume, the processing device may facilitate optional volume associations to prevent pod failure.

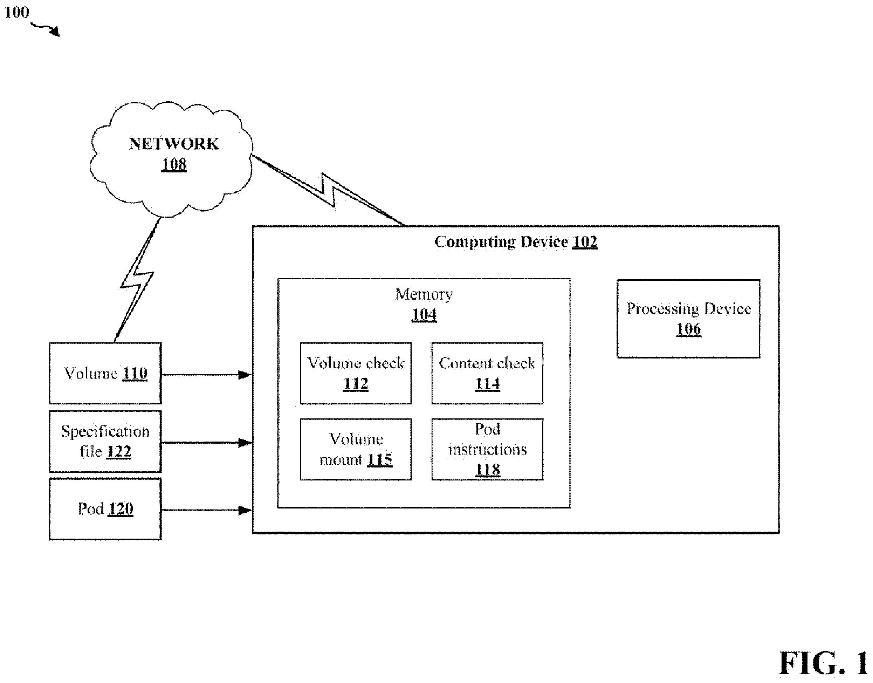

FIG. 1 is a block diagram that illustrates an example system 100 in accordance with some aspects of the present disclosure. The system 100 may include a computing device 102, memory 104, processing device 106, and a network 108. The computing device 102 may include hardware such as processing device 106 (e.g., processors, central processing units (CPUs)) and memory 104 (e.g., random access memory (RAM), hard-disk drive (HDD), persistent storage) as well as other hardware devices (e.g., network interfaces, sound card, video card, etc.- not shown). A persistent storage may be a local storage unit or a remote storage unit. Persistent storage may be a magnetic storage unit, optical storage unit, solid state storage unit, electronic storage units (main memory), or similar storage unit. Persistent storage may also be a monolithic/single device or a distributed set of devices. The processing device 106 may be operatively coupled to the memory 104.

The computing device 102 may communicate with other devices via a network 108. The network may be a public network (e.g., the internet), a private network (e.g., a local area network (LAN) or wide area network (WAN)), or a combination thereof. In one example, the network may include a wired or a wireless infrastructure, which may be provided by one or more wireless communications systems, such as a WiFi^{™} hotspot connected with the network and/or a wireless carrier system that can be implemented using various data processing equipment, communication towers (e.g., cell towers), etc. The network 108 may carry communications (e.g., data, message, packets, frames, etc.) between the computing device 102 and the other devices. The computing device 102 may also include one or more sensors (e.g., temperature sensors, moisture sensors, etc. - not shown).

In some aspects, the computing device 102 may comprise any suitable type of computing device or machine that has a programmable processor (e.g., processing device 106) including, for example, server computers, desktop computers, laptop computers, tablet computers, smartphones, set-top boxes, etc. In some examples, the computing device 102 may include a single machine or may include multiple interconnected machines (e.g., multiple servers configured in a cluster). The computing device 102 may be implemented by a common entity/organization or may be implemented by different entities/organizations. The computing device 102 may execute or include an operating system (OS). The OS may manage the execution of other components (e.g., software, applications, etc.) and/or may manage access to the hardware (e.g., processors, memory, storage devices etc.) of a device in the computing device 102.

The computing device 102 may further include a volume check 112, a content check 114, a volume mount 115, or pod instructions 118. Each of the volume check 112, the content check 114, the volume mount 115, or pod instructions 118 may comprise software/logic stored on memory 104 that is executed by the processing device 106 to perform their corresponding function. In an example, the processing device may execute instructions to cause the volume check 112 to parse or analyze a specification file 122 for information related to a volume 110. In an example, the processing device may execute instructions to cause the content check 114 to parse or analyze within the specification file 122 for information related to a file associated with the volume 110. In an example, the processing device may execute instructions to cause volume mount 115 to determine whether to mount volume 110. In an example, the processing device may execute instructions to cause pod instructions 118 to determine whether to boot a pod 120.

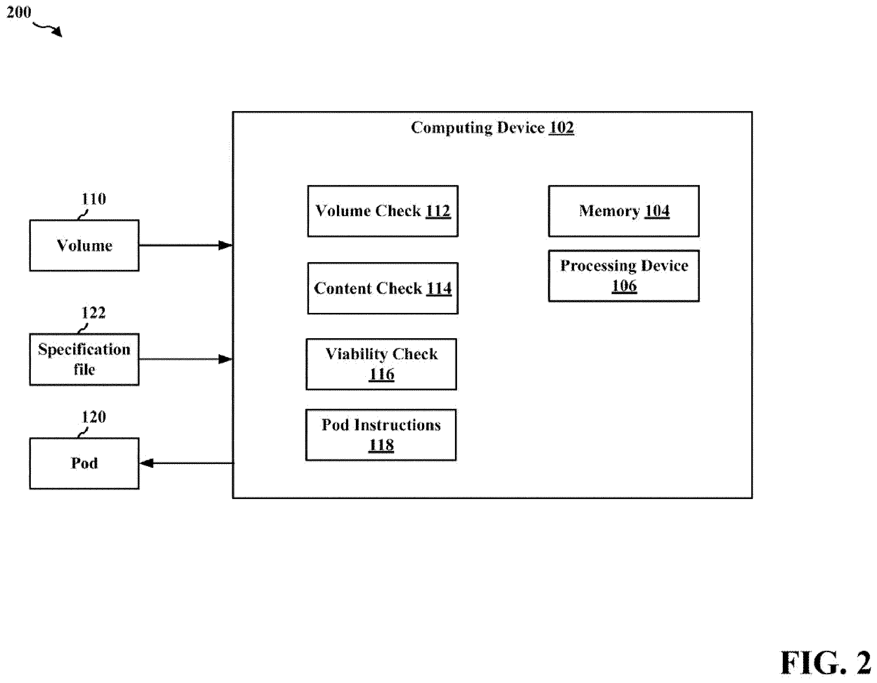

FIG. 2 is a block diagram 200 that illustrates the example system 100 of FIG. 1 in accordance with some aspects of the present disclosure. In some aspects, the volume check 112 may be configured to identify within the specification file 122 a reference to the volume 110, where the volume 110 is from a set of volumes. In some aspects, the content check 114 may be configured to identify within the specification file 122 a reference to a file associated with the volume 110. In some aspects, viability check 116 may be configured to determine a viability of the volume 110 based at least on whether the volume was created, mounted, or passed an integrity check. In some aspects, the processing device 106 determines a subset of volumes from the set of volumes for execution of a workload within pod 120. In some aspects, pod instructions 118 may be configured to determine to boot the pod 120 based at least on a viability of the volume.

In some aspects, the volume 110 may be marked as optional based at least on the specification file 122, such that from a logic perspective, if the mounting of the volume fails, the pod 120 may still be successfully booted. In some aspects, the volume 110 may be comprised of a plurality of volumes, where each of the plurality of volumes may be marked as optional, such that the pod may still be successfully booted if any one or more of the plurality of volumes is unavailable or fails. In some aspects, determining within the specification file 122 the reference to the volume 110 and/or reference to one or more files within the volume 110, allows for a determination of the relevant one or more volumes and an intended action for the contents of the one or more volumes (e.g., read, write, execute), and whether the contents are optional or mandatory for the successful execution of the workload that may be executed within the pod 120. In some aspects, the viability of the pod 120 and/or the contents of the pod 120 may be determined based on whether the volume 110 is created or not, whether the volume 110 was mounted correctly or not, or based on the results of integrity checks for checksums on the data. In some aspects, if the viability of the volume 110 fails, and it is determined, from at least the specification file 122, that the volume 110 and contents are mandatory, then the pod 120 may not be booted. In some aspects, if the viability of the volume 110 fails, but it is determined, from at least the specification file 122, that the volume 110 is marked as optional to the success of the pod 120, then the mounting of the volume 110 may be marked or determined as false, invalid, or optional, from a label perspective, and allow the pod 120 to boot. At least one advantage of the disclosure is the reduction of computational cycles in failing to boot a pod that has optional dependencies and allows for an intelligent association of volumes during a lifecycle of the pod, and thereby prevents or minimizes wasted resources.

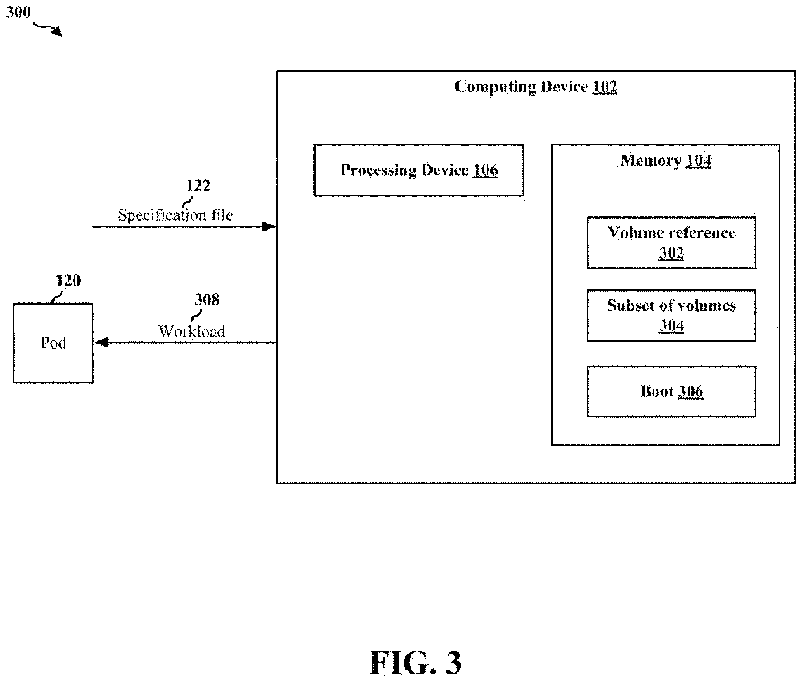

FIG. 3 is a block diagram 300 that illustrates the computing device 102 in accordance with some aspects of the present disclosure. As discussed hereinabove, the computing device 102 includes a memory 104 and a processing device 106. The processing device 106 is operatively coupled to the memory 104.

The processing device 106 is to identify within a specification file 122, a reference (e.g., volume reference 302) to a first volume from a set of volumes or to a file associated with the first volume from the set of volumes. The processing device 106 is to determine a subset of volumes 304 from the set of volumes for execution of a workload 308 within a pod 120. The processing device 106 is to determine whether to boot 306 the pod 120 based at least on a viability of the volume as discussed in further detail herein.

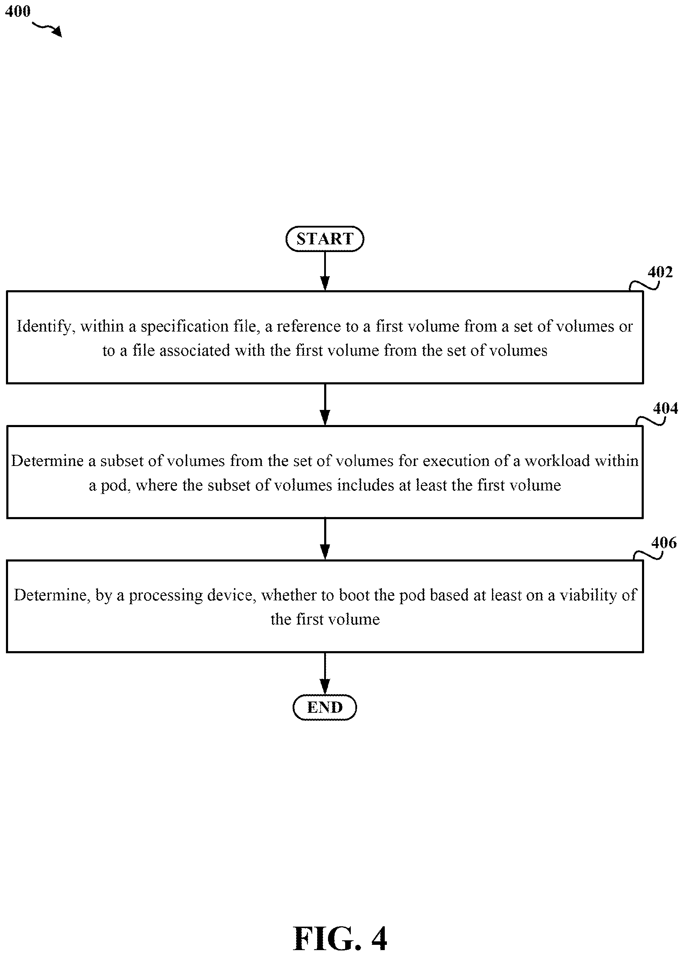

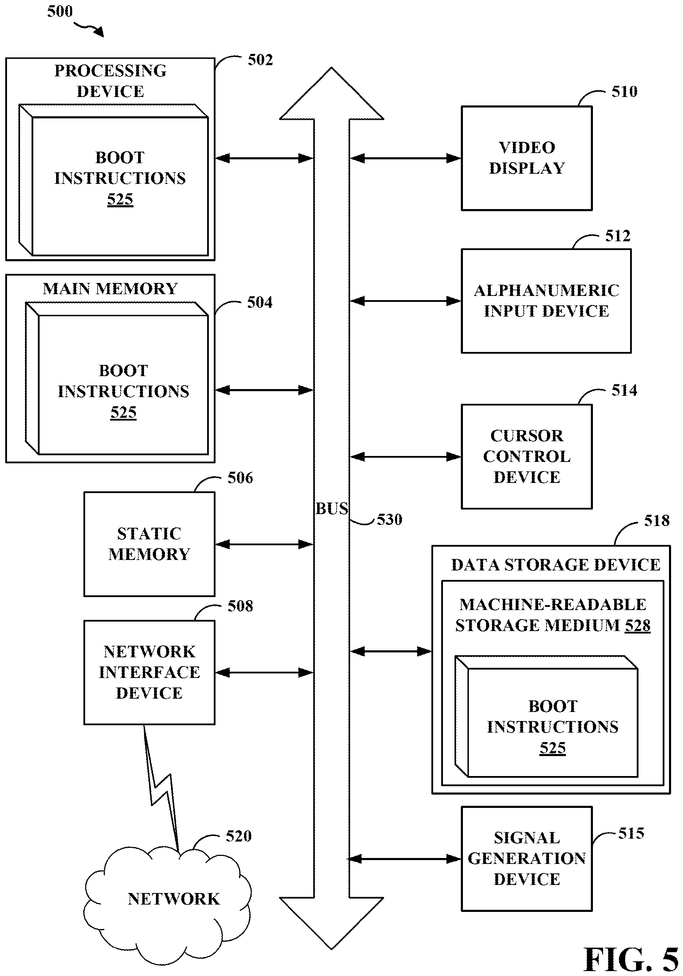

FIG. 4 is a flow diagram of a method 400 for optional volume associations to prevent pod failure in accordance with some aspects of the present disclosure. The method 400 may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some aspects, the method 400 may be performed by a computing device (e.g., computing device 102). For instance, the method 400 may be performed by the processing device 106 of computing device 102. In some aspects, the method 400 may be performed by the machine depicted in FIG. 5.

Referring also to FIGS. 2 and 3, at block 402, the processing device 106, identifies, within a specification file 122, a reference to a first volume (e.g., volume 110) from a set of volumes or a reference to a file associated with the first volume (e.g., volume 110) from the set of volumes. In an example, the device may be the computing device 102. In an example, the reference to the first volume may be determined by the volume check 112. In an example, the reference to the file associated with the first volume may be determined by the content check 114. In an example, the first volume may be the volume 110. In an example, the specification file may be the specification file 122.

At block 404, the processing device 106 determines a subset of volumes from the set of volumes for execution of a workload 308 within a pod 120. In an example, the subset of volumes may include at least the volume 110. In an example, the pod may be the pod 120.

At block 406, the processing device 106 determines whether to boot the pod 120 based at least on a viability of the one or more attached volumes/viability check. In an example, the determination to boot the pod 120 may be based on pod instructions 118. In an example, the viability of the pod 120 may be based on viability check 116.

In some aspects, the viability of the pod 120 may be based on one or more factors such as whether the first volume (e.g., volume 110) is created, whether the first volume (e.g., volume 110) is mounted, or whether data integrity checks within the first volume (e.g., volume 110) are passed. In some aspects, the pod 120 may be prevented from booting in response to the pod 120 being marked as mandatory for the execution of the workload 308 and in instances where the viability of the volume 110 fails. The pod 120 may be marked as mandatory based at least on the specification file 122. In some aspects, the pod 120 may be determined to boot in response to the volume 110 being marked as optional for the execution of the workload and in instances where the viability of the volume 110 fails. In such aspects, a mounting of the volume may be determined as false. The volume 110 may be marked as optional based at least on the specification file 122.

FIG. 5 illustrates a diagrammatic representation of a machine in the example form of a computer system 500 within which a set of instructions, for causing the machine to perform any one or more of the methodologies discussed herein for optional volume associations to prevent pod failures. More specifically, the machine may identify, within a specification file, a reference to a first volume from a set of volumes or to a file associated with the first volume from the set of volumes; determine a subset of volumes from the set of volumes for execution of a workload within a pod, where the subset of volumes includes at least the first volume; and determine, by a processing device, whether to boot the pod based at least on a viability of the first volume.

In alternative aspects, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or a bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In one aspect, the computer system 500 may be representative of a server.

The computer system 500 includes a processing device 502, a main memory 504 (e.g., read-only memory (ROM), flash memory, dynamic random access memory (DRAM), a static memory 506 (e.g., flash memory, static random access memory (SRAM), etc.), and a data storage device 518, which communicate with each other via a bus 530. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

The computer system 500 may further include a network interface device 508 which may communicate with a network 520. The computer system 500 also may include a video display unit 510 (e.g., a liquid crystal display (LCD) or a cathode ray tube (CRT)), an alphanumeric input device 512 (e.g., a keyboard), a cursor control device 514 (e.g., a mouse), and a signal generation device 515 (e.g., a speaker). In one example, the video display unit 510, the alphanumeric input device 512, and the cursor control device 514 may be combined into a single component or device (e.g., an LCD touch screen).

The processing device 502 represents one or more general-purpose processing devices such as a microprocessor, a central processing unit, or the like. More particularly, the processing device 502 may be a complex instruction set computing (CISC) microprocessor, a reduced instruction set computer (RISC) microprocessor, a very long instruction word (VLIW) microprocessor, or a processor implementing other instruction sets, or processors implementing a combination of instruction sets. The processing device 502 may also be one or more special-purpose processing devices such as an application specific integrated circuit (ASIC), a field programmable gate array (FPGA), a digital signal processor (DSP), a network processor, or the like. The processing device 502 is configured with boot instructions 525, for performing the operations and steps discussed herein. For example, the boot instructions 525 may include instructions for optional volume associations to prevent pod failures.

The data storage device 518 may include a machine-readable storage medium 528 storing boot instructions 525 (e.g., software) embodying any one or more of the methodologies of functions described herein. The boot instructions 525 may also reside, completely or partially, within the main memory 504 or within the processing device 502 during execution thereof by the computer system 500; the main memory 504 and the processing device 502 also constituting machine-readable storage media. The boot instructions 525 may further be transmitted or received over the network 520 via the network interface device 508.

The machine-readable storage medium 528 may also be used to store the boot instructions 525 to perform a method for optional volume associations to prevent pod failures, as described herein. While the machine-readable storage medium 528 is shown in an exemplary aspect to be a single medium, the term "machine-readable storage medium" should be taken to include a single medium or multiple media (e.g., a centralized or distributed database, or associated caches and servers) that store the one or more sets of instructions. A machine-readable storage medium includes any mechanism for storing information in a form (e.g., software, processing application) readable by a machine (e.g., a computer). The machine-readable storage medium may include, but is not limited to, a magnetic storage medium (e.g., floppy diskette), an optical storage medium (e.g., CD-ROM), a magneto-optical storage medium, a read-only memory (ROM), random-access memory (RAM), erasable programmable memory (e.g., EPROM and EEPROM), flash memory, or another type of medium suitable for storing electronic instructions.

The preceding description sets forth numerous specific details such as examples of specific systems, components, methods, and so forth, in order to provide a good understanding of several aspects of the present disclosure. It will be apparent to one skilled in the art, however, that at least some aspects of the present disclosure may be practiced without these specific details. In other instances, well-known components or methods are not described in detail or are presented in simple block diagram format in order to avoid unnecessarily obscuring the present disclosure. Thus, the specific details set forth are merely exemplary. Particular aspects may vary from these exemplary details and still be contemplated to be within the scope of the present disclosure.

Additionally, some aspects may be practiced in distributed computing environments where the machine-readable medium is stored on and or executed by more than one computer system. In addition, the information transferred between computer systems may either be pulled or pushed across the communication medium connecting the computer systems.

Aspects of the claimed subject matter include, but are not limited to, various operations described herein. These operations may be performed by hardware components, software, firmware, or a combination thereof.

Although the operations of the methods herein are shown and described in a particular order, the order of the operations of each method may be altered so that certain operations may be performed in an inverse order or so that certain operation may be performed, at least in part, concurrently with other operations. In another aspect, instructions or sub-operations of distinct operations may be in an intermittent or alternating manner.

The above description of illustrated implementations of the invention, including what is described in the Abstract, is not intended to be exhaustive or to limit the invention to the precise forms disclosed. While specific implementations of, and examples for, the invention are described herein for illustrative purposes, various equivalent modifications are possible within the scope of the invention, as those skilled in the relevant art will recognize. The words "example" or "exemplary" are used herein to mean serving as an example, instance, or illustration. Any aspect or design described herein as "example" or "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or". That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an aspect" or "one aspect" or "an implementation" or "one implementation" throughout is not intended to mean the same aspect or implementation unless described as such. Furthermore, the terms "first," "second," "third," "fourth," etc. as used herein are meant as labels to distinguish among different elements and may not necessarily have an ordinal meaning according to their numerical designation. Unless specifically stated otherwise, terms such as "identifying," "determining," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices.

It will be appreciated that variants of the above-disclosed and other features and functions, or alternatives thereof, may be combined into may other different systems or applications. Various presently unforeseen or unanticipated alternatives, modifications, variations, or improvements therein may be subsequently made by those skilled in the art which are also intended to be encompassed by the following claims. The claims may encompass aspects in hardware, software, or a combination thereof.

## Claims

1. A method, comprising:
identifying, within a specification file, a reference to a first volume from a set of volumes or to a file associated with the first volume from the set of volumes;
determining a subset of volumes from the set of volumes for execution of a workload within a pod, wherein the subset of volumes includes at least the first volume; and
determining, by a processing device, whether to boot the pod based at least on a viability of the first volume.

2. The method of claim 1, further comprising:
determining the viability of the pod based at least on:
whether the first volume is created,
whether the first volume is mounted, or
integrity checks on data within the first volume.

3. The method of claim 2, further comprising:
marking the pod as mandatory for the execution of the workload based at least on the specification file.

4. The method of claim 3, wherein the pod is prevented from booting in response to the pod marked as mandatory for the execution of the workload and a failure of the viability of the first volume.

5. The method of claim 2, further comprising:
marking the pod as optional for the execution of the workload based at least on the specification file.

6. The method of claim 5, wherein the pod is determined to be booted in response to the first volume being marked as optional for the execution of the workload and a failure of the viability of the first volume.

7. The method of claim 6, wherein a mounting of the first volume is determined as false.

8. A system, comprising:
a memory; and
a processing device operatively coupled to the memory, the processing device configured to:
identify, within a specification file, a reference to a first volume from a set of volumes or to a file associated with the first volume from the set of volumes;
determine a subset of volumes from the set of volumes for execution of a workload within a pod, wherein the subset of volumes includes at least the first volume; and
determine, by a processing device, whether to boot the pod based at least on a viability of the first volume.

9. The system of claim 8, wherein the processing device is configured to:
determine the viability of the pod based at least on:
whether the first volume is created,
whether the first volume is mounted, or
integrity checks on data within the first volume.

10. The system of claim 9, wherein the processing device is configured to:
mark the pod as mandatory for the execution of the workload based at least on the specification file.

11. The system of claim 10, wherein the pod is prevented to boot in response to the pod marked as mandatory for the execution of the workload and a failure of the viability of the first volume.

12. The system of claim 9, wherein the processing device is configured to:
mark the pod as optional for the execution of the workload based at least on the specification file.

13. The system of claim 12, wherein the pod is determined to be booted in response to the first volume being marked as optional to for the execution of the workload and a failure of the viability of the first volume.

14. The system of claim 13, wherein a mounting of the first volume is determined as false.

15. A non-transitory computer-readable medium having instructions stored thereon which, when executed by a processing device cause the processing device to perform the method of claims 1-7.
